# FASCICULE DE BREVET EUROPEEN

(11) **EP 3 708 035 B1**
(45) Date de publication et mention de la délivrance du brevet: **27.04.2022**
(21) Numéro de dépôt: 20162869.0
(22) Date de dépôt: 13.03.2020
(51) Int. Cl.: A47J 17/02

(54) **ACCESSOIRE PÈLE-AIL MANUEL**
MANUELLES KNOBLAUCHSCHÄLE ZUBEHÖR
MANUAL GARLIC PEELING ACCESSORY

(30) Priorité: 14.03.2019 FR 1902626
(43) Date de publication de la demande: 16.09.2020
(73) Titulaire: SEB S.A., 69130 Ecully (FR)
(72) Inventeur: AVERTY, Lionel, 69570 DARDILLY (FR); DOMINGUEZ, Augustin, 65000 TARBES (FR); LARGUEZE, Mathieu, 65000 TARBES (FR)
(74) Mandataire: SEB Développement

(56) Documents cités:
- CN-U- 204 683 289
- GB-A- 2 315 990
- US-A- 5 573 803
- US-A1- 2018 020 863

## Description

La présente invention concerne de manière générale le domaine des accessoires de préparation culinaire.

La présente invention concerne plus particulièrement un accessoire pèle-ail manuel prévu pour faciliter le retrait de l'enveloppe extérieure d'une ou de plusieurs gousses d'ail.

Il est connu du document WO9706701 de réaliser un accessoire pèle-ail manuel comportant un corps tubulaire ayant un intérieur creux s'étendant d'une première extrémité ouverte à une deuxième extrémité ouverte, dans lesquels le corps tubulaire est réalisé en matériau flexible permettant au corps tubulaire de se déformer sous l'effet d'une pression exercée lors d'une utilisation de l'accessoire pèle-ail. Toutefois dans le document le corps tubulaire présente une géométrie cylindrique et les gousses d'ail ont tendance à s'échapper par l'une ou l'autre des extrémités ouvertes lors de l'utilisation de l'accessoire.

Le document CN204683289U propose de réaliser un accessoire pèle-ail manuel dans lequel le corps tubulaire forme une chambre de travail s'étendant entre une première restriction de section et une deuxième restriction de section agencées chacune à distance des extrémités ouvertes. Ces dispositions contribuent à améliorer la rétention des gousses d'ail à l'intérieur de la chambre de travail, toutefois la distance entre chacune des restrictions de section et l'extrémité ouverte adjacente est faible, de sorte que cette amélioration est limitée. De plus la surface intérieure du corps tubulaire présente des picots, ce qui rend l'accessoire pèle-ail difficile à nettoyer.

Un objet de la présente invention est de proposer un accessoire pèle-ail manuel du type précité qui soit efficace et facile à utiliser.

Un objet de la présente invention est de proposer un accessoire pèle-ail manuel du type précité qui soit facile à réaliser.

Ces objets sont atteints avec un accessoire pèle-ail manuel selon la revendication 1. Ainsi lorsqu'une gousse d'ail s'échappe de la première chambre de travail par la première restriction de section, cette gousse d'ail peut être retenue par la troisième restriction de section dans la deuxième chambre de travail, même si une extrémité de ladite gousse d'ail tend à commencer à traverser la première extrémité ouverte. Les gousses d'ail introduites dans le corps tubulaire sont davantage confinées à l'intérieur du corps tubulaire et s'échappent moins par la première extrémité ouverte. La présence de deux extrémités ouvertes facilite la réalisation de l'accessoire ainsi que l'utilisation de l'accessoire. Les deux extrémités ouvertes permettent de mieux contrôler la déformation de l'accessoire lorsque l'utilisateur fait rouler sur un support approprié le corps tubulaire contenant une ou plusieurs gousses d'ail. L'utilisateur peut facilement retirer les gousses d'ail pelées ainsi que les pelures. Le nettoyage est également facilité par la configuration tubulaire de l'accessoire.

La première restriction de section formée par un premier rétreint annulaire permet de faciliter l'utilisation de l'accessoire pèle-ail en rendant plus régulière la déformation de l'accessoire pèle-ail au niveau de la première restriction de section lors du roulement de l'accessoire pèle-ail sur le plan de travail. La deuxième restriction de section formée par un deuxième rétreint annulaire permet de faciliter l'utilisation de l'accessoire pèle-ail en rendant plus régulière la déformation de l'accessoire pèle-ail au niveau de la deuxième restriction de section lors du roulement de l'accessoire pèle-ail sur le plan de travail. La troisième restriction de section confondue avec la première extrémité ouverte permet de simplifier la réalisation de l'accessoire pèle-ail.

Avantageusement encore, une première section maximale de la première chambre de travail est supérieure à une deuxième section maximale de la deuxième chambre de travail. L'utilisateur peut ainsi loger préférentiellement la ou les gousses d'ail à éplucher dans la première chambre de travail, et faire rouler l'accessoire en dirigeant préférentiellement la ou les gousses d'ail vers la première restriction séparant la première chambre de travail de la deuxième chambre de travail.

Avantageusement encore, la deuxième restriction de section est agencée à distance de la deuxième extrémité ouverte, et le corps tubulaire présente une troisième chambre de travail configurée pour loger au moins la majeure partie d'une gousse d'ail, la troisième chambre de travail étant agencée entre la deuxième restriction de section et la deuxième extrémité ouverte, la troisième chambre de travail étant délimitée par la deuxième restriction de section et par une quatrième restriction de section. Cette disposition permet de mieux utiliser la première chambre de travail en facilitant la rétention des gousses d'ail s'échappant de la première chambre de travail par la première restriction de section ou par la deuxième restriction de section. L'utilisateur palpant la présence de gousses d'ail dans la deuxième chambre de travail ou dans la troisième chambre de travail, ou voyant des gousses d'ail commencer à sortir par la première extrémité ouverte ou par la deuxième extrémité ouverte peut adapter la position de sa main sur le corps tubulaire pour ramener lesdites gousses d'ail vers la première chambre de travail.

Avantageusement alors, la quatrième restriction de section est confondue avec la deuxième extrémité ouverte. Cette disposition permet de simplifier la réalisation de l'accessoire pèle-ail.

Avantageusement encore, une première section maximale de la première chambre de travail est supérieure à une troisième section maximale de la troisième chambre de travail. L'utilisateur peut ainsi loger préférentiellement la ou les gousses d'ail à éplucher dans la première chambre de travail, et faire rouler l'accessoire en dirigeant la ou les gousses d'ail vers la première restriction séparant la première chambre de travail de la deuxième chambre de travail ou vers la deuxième restriction séparant la première chambre de travail de la troisième chambre de travail.

Avantageusement encore, la deuxième chambre de travail et la troisième chambre de travail sont agencées de manière symétrique de part et d'autre de la première chambre de travail. Cette disposition permet de simplifier l'utilisation de l'accessoire pèle-ail, la symétrie d'agencement rendant plus prévisible le comportement de l'accessoire pèle-ail lors de sa déformation.

Avantageusement encore, le corps tubulaire présente une face intérieure lisse. Cette disposition permet de faciliter le nettoyage de l'accessoire pèle-ail. Cette disposition contribue également à simplifier la réalisation de l'accessoire pèle-ail.

Selon une forme de réalisation, le corps tubulaire est réalisé en matériau élastomère de qualité alimentaire.

Selon une forme de réalisation, le corps tubulaire est réalisé en matériau silicone de qualité alimentaire.

Selon une forme de réalisation, le matériau flexible du corps tubulaire présente une dureté comprise entre 50 et 65 Shores A, de préférence comprise entre 55 et 60 Shores A.

Avantageusement encore, le corps tubulaire présente une géométrie de révolution. Cette disposition permet de faciliter l'utilisation de l'accessoire pèle-ail en rendant plus régulière la déformation de l'accessoire pèle-ail lors du roulement de l'accessoire pèle-ail sur le plan de travail.

Avantageusement encore, le corps tubulaire présente une paroi d'épaisseur comprise entre 1,5 et 2 mm.

D'autres caractéristiques et avantages de la présente invention apparaîtront plus clairement à la lecture de la description détaillée qui suit d'un exemple de réalisation, pris à titre nullement limitatif, illustré dans les figures annexées, dans lesquelles :
La figure 1 représente une vue en perspective d'un exemple de réalisation d'un accessoire pèle-ail manuel selon l'invention.
La figure 2 représente une vue en coupe longitudinale de l'exemple de réalisation d'un accessoire pèle-ail manuel selon l'invention illustré sur la figure 1.

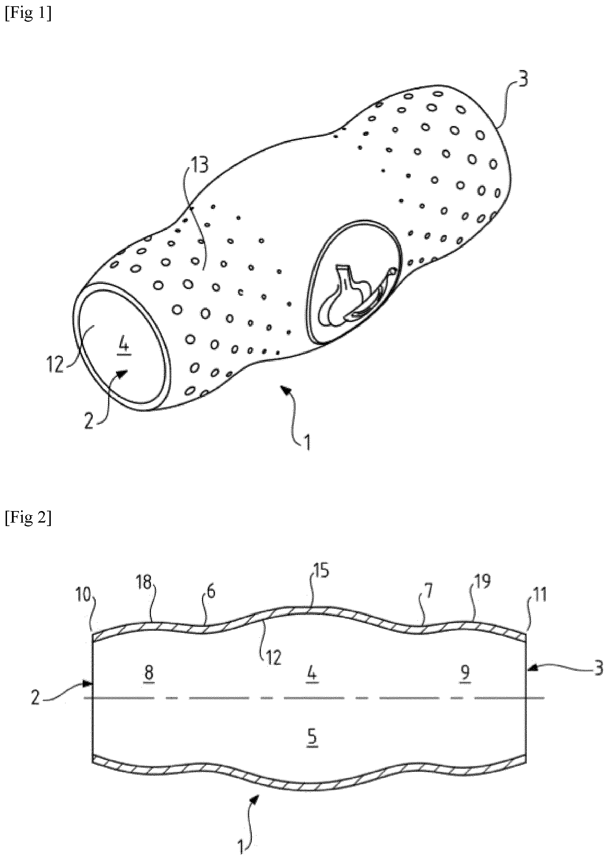

L'accessoire pèle-ail manuel illustré sur les figures 1 et 2 comporte un corps tubulaire 1 ayant une première extrémité ouverte 2, une deuxième extrémité ouverte 3 opposée à la première extrémité ouverte 2, et un intérieur creux 4 s'étendant de la première extrémité ouverte 2 à la deuxième extrémité ouverte 3. La première extrémité ouverte 2 et la deuxième extrémité ouverte 3 sont chacune configurée pour l'introduction d'une gousse d'ail dans le corps tubulaire 1.

Le corps tubulaire 1 est réalisé en matériau flexible permettant au corps tubulaire 1 de se déformer sous l'effet d'une pression exercée lors d'une utilisation de l'accessoire pèle-ail. Le corps tubulaire 1 présente par exemple une paroi d'épaisseur comprise entre 1,5 et 2 mm.

Le corps tubulaire 1 peut présenter une face intérieure 12 lisse pour faciliter le nettoyage et une face extérieure 13 au moins partiellement non lisse, pour faciliter la tenue en main. La face extérieure 13 peut présenter par exemple plusieurs séries de cavité, tel que représenté sur la figure 1.

Le corps tubulaire 1 est réalisé en matériau élastomère de qualité alimentaire, notamment en matériau silicone de qualité alimentaire. Avantageusement, le matériau flexible du corps tubulaire 1 présente une dureté comprise entre 50 et 65 Shores A, de préférence comprise entre 55 et 60 Shores A.

Tel que mieux visible sur la figure 2, le corps tubulaire 1 présente une première restriction de section 6 et une deuxième restriction de section 7. La première restriction de section 6 est agencée à distance de la première extrémité ouverte 2.

Le corps tubulaire 1 ménage une première chambre de travail 5 s'étendant entre la première restriction de section 6 et la deuxième restriction de section 7. La première restriction de section 6 et la deuxième restriction de section 7 sont chacune configurée pour l'introduction d'une gousse d'ail dans la première chambre de travail 5. La première chambre de travail 5 présente une première section maximale 15 agencée entre la première restriction de section 6 et la deuxième restriction de section 7. La première chambre de travail 5 présente avantageusement une courbure régulière avec une section diminuant de part et d'autre de la première section maximale 15 en direction de la première restriction de section 6 et de la deuxième restriction de section 7.

Tel que bien visible sur la figure 2, le corps tubulaire 1 présente une deuxième chambre de travail 8 agencée entre la première restriction de section 6 et la première extrémité ouverte 2. La deuxième chambre de travail 8 est délimitée par la première restriction de section 6 et par une troisième restriction de section 10 du corps tubulaire 1. La deuxième chambre de travail 8 est configurée pour loger au moins la majeure partie d'une gousse d'ail. La deuxième chambre de travail 8 présente une deuxième section maximale 18 agencée entre la première restriction de section 6 et la troisième restriction de section 10. La deuxième chambre de travail 8 présente avantageusement une courbure régulière avec une section diminuant de part et d'autre de la deuxième section maximale 18 en direction de la première restriction de section 6 et de la troisième restriction de section 10.

Plus particulièrement dans l'exemple de réalisation illustré sur les figures, la première section maximale 15 de la première chambre de travail 5 est supérieure à la deuxième section maximale 18 de la deuxième chambre de travail 8. Par ailleurs, la troisième restriction de section 10 est confondue avec la première extrémité ouverte 2.

Plus particulièrement dans l'exemple de réalisation illustré sur les figures, la deuxième restriction de section 7 est agencée à distance de la deuxième extrémité ouverte 3. Le corps tubulaire 1 présente une troisième chambre de travail 9 agencée entre la deuxième restriction de section 7 et la deuxième extrémité ouverte 3. La troisième chambre de travail 9 est délimitée par la deuxième restriction de section 7 et par une quatrième restriction de section 11 du corps tubulaire 1. La troisième chambre de travail 9 est configurée pour loger au moins la majeure partie d'une gousse d'ail. La troisième chambre de travail 9 présente une troisième section maximale 19 agencée entre la deuxième restriction de section 7 et la quatrième restriction de section 11. La troisième chambre de travail 9 présente avantageusement une courbure régulière avec une section diminuant de part et d'autre de la troisième section maximale 19 en direction de la deuxième restriction de section 7 et de la quatrième restriction de section 11. La première section maximale 15 de la première chambre de travail 5 est supérieure à la troisième section maximale 19 de la troisième chambre de travail 9. Par ailleurs, la quatrième restriction de section 11 est confondue avec la deuxième extrémité ouverte 3.

Plus particulièrement dans l'exemple de réalisation illustré sur les figures, la deuxième chambre de travail 8 et la troisième chambre de travail 9 sont agencées de manière symétrique par rapport à la première chambre de travail 5. La deuxième section maximale 18 et la troisième section maximale 19 sont avantageusement identiques.

Plus particulièrement dans l'exemple de réalisation illustré sur les figures, le corps tubulaire 1 présente une géométrie de révolution. La première restriction de section 6 est formée par un premier rétreint annulaire, et la deuxième restriction de section 7 est formée par un deuxième rétreint annulaire. Ainsi la face intérieure 12 du corps tubulaire 1 ne présente pas de saillie interne au niveau de la première restriction de section 6 ou de la deuxième restriction de section 7, mais seulement une courbure convexe, ce qui contribue à faciliter le nettoyage de la face intérieure 12 du corps tubulaire 1. La première extrémité ouverte 2 est formée par un troisième rétreint annulaire, et la deuxième extrémité ouverte 3 est formée par un quatrième rétreint annulaire. Ainsi la face intérieure 12 du corps tubulaire 1 ne présente pas de saillie interne au niveau de la troisième restriction de section 10 ou de la quatrième restriction de section 11, mais seulement une courbure convexe, ce qui contribue à faciliter le nettoyage de la face intérieure 12 du corps tubulaire 1, mais aussi ce qui contribue à une déformation plus homogène et plus prévisible du corps tubulaire.

L'accessoire pèle-ail manuel illustré sur les figures 1 et 2 s'utilise de la manière suivante. L'utilisateur introduit au moins une gousse d'ail dans le corps tubulaire 1, par la première extrémité ouverte 2 ou par la deuxième extrémité ouverte 3, de préférence jusqu'à la première chambre de travail 5. L'utilisateur positionne le corps tubulaire 1 ainsi rempli sur un plan de travail, et le fait rouler en utilisant la paume de la main. La première restriction de section 6 et la deuxième restriction de section 7 contribuent à contenir la ou les gousses d'ail dans la première chambre de travail 5, tout en contribuant à l'épluchage, du fait de la contrainte de cisaillement exercée par la section variable du corps tubulaire sur la peau des gousses d'ail, grâce à l'adhérence du matériau flexible utilisé pour la réalisation du corps tubulaire 1. La deuxième chambre de travail 8 et la troisième chambre de travail 9 permettent de recueillir la ou les gousses d'ail s'échappant de la première chambre de travail 5, la troisième restriction de section 10 et la quatrième restriction de section 11 contribuant à contenir la ou les gousses d'ail dans le corps tubulaire 1. Les gousses d'ail ont ainsi moins tendance à s'échapper du corps tubulaire 1. La structure du corps tubulaire 1 ouverte aux deux extrémités facilite le nettoyage de l'accessoire pèle ail manuel. L'utilisation de l'accessoire pèle-ail manuel est ainsi facilitée.

A titre de variante, au moins la première extrémité ouverte 2, respectivement au moins la deuxième extrémité ouverte 3, est configurée pour l'introduction d'une gousse d'ail dans le corps tubulaire 1. Alors au moins la première restriction de section 6, respectivement au moins la deuxième restriction de section 7 est configurée pour l'introduction d'une gousse d'ail dans la première chambre de travail 5.

A titre de variante, le corps tubulaire 1 ne présente pas nécessairement une troisième chambre de travail configurée pour loger au moins la majeure partie d'une gousse d'ail. Si désiré, la deuxième restriction de section 7 peut être confondue avec la deuxième extrémité ouverte 3. En alternative, la deuxième restriction de section 7 peut s'étendre à distance de la deuxième extrémité ouverte 3 sans pour autant former une chambre de travail configurée pour loger au moins la majeure partie d'une gousse d'ail.

La présente invention n'est nullement limitée à l'exemple de réalisation décrit et à ses variantes, mais englobe de nombreuses modifications dans le cadre des revendications.

## Revendications

1. Accessoire pèle-ail manuel comportant un corps tubulaire (1) ayant une première extrémité ouverte (2), une deuxième extrémité ouverte (3) opposée à la première extrémité ouverte (2), et un intérieur creux (4) s'étendant de la première extrémité ouverte (2) à la deuxième extrémité ouverte (3), le corps tubulaire (1) étant réalisé en matériau flexible permettant au corps tubulaire (1) de se déformer sous l'effet d'une pression exercée lors d'une utilisation de l'accessoire pèle-ail, le corps tubulaire (1) ménageant une première chambre de travail (5) configurée pour loger au moins une gousse d'ail, le corps tubulaire (1) présentant une première restriction de section (6) agencée à distance de la première extrémité ouverte (2) et une deuxième restriction de section (7), la première chambre de travail (5) s'étendant entre la première restriction de section (6) et la deuxième restriction de section (7), le corps tubulaire (1) présentant une deuxième chambre de travail (8) configurée pour loger au moins la majeure partie d'une gousse d'ail, la deuxième chambre de travail (8) étant agencée entre la première restriction de section (6) et la première extrémité ouverte (2), la deuxième chambre de travail (8) étant délimitée par la première restriction de section (6) et par une troisième restriction de section (10), **caractérisé en ce que** la première restriction de section (6) est formée par un premier rétreint annulaire, **en ce que** la deuxième restriction de section (7) est formée par un deuxième rétreint annulaire, **en ce que** la troisième restriction de section (10) est confondue avec la première extrémité ouverte (2), et **en ce que** la première extrémité ouverte (2) est formée par un troisième rétreint annulaire.

2. Accessoire pèle-ail manuel selon la revendication 1, **caractérisé en ce qu'**une première section maximale (15) de la première chambre de travail (5) est supérieure à une deuxième section maximale (18) de la deuxième chambre de travail (8).

3. Accessoire pèle-ail manuel selon l'une des revendications 1 ou 2, **caractérisé en ce que** la deuxième restriction de section (7) est agencée à distance de la deuxième extrémité ouverte (3), et **en ce que** le corps tubulaire (1) présente une troisième chambre de travail (9) configurée pour loger au moins la majeure partie d'une gousse d'ail, la troisième chambre de travail (9) étant agencée entre la deuxième restriction de section (7) et la deuxième extrémité ouverte (3), la troisième chambre de travail (9) étant délimitée par la deuxième restriction de section (7) et par une quatrième restriction de section (11).

4. Accessoire pèle-ail manuel selon la revendication 3, **caractérisé en ce que** la quatrième restriction de section (11) est confondue avec la deuxième extrémité ouverte (3).

5. Accessoire pèle-ail manuel selon l'une des revendications 3 ou 4, **caractérisé en ce qu'**une première section maximale (15) de la première chambre de travail (5) est supérieure à une troisième section maximale (19) de la troisième chambre de travail (9).

6. Accessoire pèle-ail manuel selon l'une des revendications 3 à 5, **caractérisé en ce que** la deuxième chambre de travail (8) et la troisième chambre de travail (9) sont agencées de manière symétrique de part et d'autre de la première chambre de travail (5).

7. Accessoire pèle-ail manuel selon l'une des revendications 1 à 6, **caractérisé en ce que** la deuxième extrémité ouverte (3) est formée par un quatrième rétreint annulaire.

8. Accessoire pèle-ail manuel selon l'une des revendications 1 à 7, **caractérisé en ce que** le corps tubulaire (1) présente une face intérieure (12) lisse.

9. Accessoire pèle-ail manuel selon l'une des revendications 1 à 8, **caractérisé en ce que** le corps tubulaire (1) est réalisé en matériau élastomère de qualité alimentaire.

10. Accessoire pèle-ail manuel selon l'une des revendications 1 à 9, **caractérisé en ce que** le corps tubulaire (1) est réalisé en matériau silicone de qualité alimentaire.

11. Accessoire pèle-ail manuel selon l'une des revendications 1 à 10, **caractérisé en ce que** le matériau flexible du corps tubulaire (1) présente une dureté comprise entre 50 et 65 Shores A, de préférence comprise entre 55 et 60 Shores A.

12. Accessoire pèle-ail manuel selon l'une des revendications 1 à 11, **caractérisé en ce que** le corps tubulaire (1) présente une géométrie de révolution.

13. Accessoire pèle-ail manuel selon l'une des revendications 1 à 12, **caractérisé en ce que** le corps tubulaire (1) présente une paroi d'épaisseur comprise entre 1,5 et 2 mm.

## Patentansprüche

1. Manuelles Knoblauchschälgerät mit einem röhrenförmigen Körper (1), der ein erstes offenes Ende (2), ein zweites offenes Ende (3) gegenüber dem ersten offenen Ende (2) und einen hohlen Innenraum (4) aufweist, der sich vom ersten offenen Ende (2) zum zweiten offenen Ende (3) erstreckt, wobei der röhrenförmige Körper (1) aus einem flexiblen Material hergestellt ist, das es dem röhrenförmigen Körper (1) ermöglicht, sich unter Einwirkung eines Drucks zu verformen, welcher bei Gebrauch des Knoblauchschälgeräts ausgeübt wird, wobei der röhrenförmige Körper (1) eine erste Arbeitskammer (5) bildet, die so konfiguriert ist, dass sie mindestens eine Knoblauchzehe aufnehmen kann, wobei der röhrenförmige Körper (1) eine erste Querschnittsverengung (6), die in einem Abstand von dem ersten offenen Ende (2) angeordnet ist, und eine zweite Querschnittsverengung (7) aufweist, wobei sich die erste Arbeitskammer (5) zwischen der ersten Querschnittsverengung (6) und der zweiten Querschnittsverengung (7) erstreckt, wobei der röhrenförmige Körper (1) eine zweite Arbeitskammer (8) aufweist, die so konfiguriert ist, dass sie zumindest den größten Teil einer Knoblauchzehe aufnehmen kann, wobei die zweite Arbeitskammer (8) zwischen der ersten Querschnittsverengung (6) und dem ersten offenen Ende (2) angeordnet ist, wobei die zweite Arbeitskammer (8) durch die erste Querschnittsverengung (6) und durch eine dritte Querschnittsverengung (10) begrenzt wird, **dadurch gekennzeichnet, dass** die erste Querschnittsverengung (6) durch eine erste ringförmige Einschnürung gebildet wird, dass die zweite Querschnittsverengung (7) durch eine zweite ringförmige Einschnürung gebildet wird, dass die dritte Querschnittsverengung (10) mit dem ersten offenen Ende (2) zusammenfällt, und dass das erste offene Ende (2) durch eine dritte ringförmige Einschnürung gebildet wird.

2. Manuelles Knoblauchschälgerät nach Anspruch 1, **dadurch gekennzeichnet, dass** ein erster Maximalquerschnitt (15) der ersten Arbeitskammer (5) größer ist als ein zweiter Maximalquerschnitt (18) der zweiten Arbeitskammer (8).

3. Manuelles Knoblauchschälgerät nach einem der Ansprüche 1 oder 2, **dadurch gekennzeichnet, dass** die zweite Querschnittsverengung (7) in einem Abstand von dem zweiten offenen Ende (3) angeordnet ist und dass der röhrenförmige Körper (1) eine dritte Arbeitskammer (9) aufweist, die so konfiguriert ist, dass sie zumindest den größten Teil einer Knoblauchzehe aufnehmen kann, wobei die dritte Arbeitskammer (9) zwischen der zweiten Querschnittsverengung (7) und dem zweiten offenen Ende (3) angeordnet ist, wobei die dritte Arbeitskammer (9) durch die zweite Querschnittsverengung (7) und durch eine vierte Querschnittsverengung (11) begrenzt wird.

4. Manuelles Knoblauchschälgerät nach Anspruch 3, **dadurch gekennzeichnet, dass** die vierte Querschnittsverengung (11) mit dem zweiten offenen Ende (3) zusammenfällt.

5. Manuelles Knoblauchschälgerät nach einem der Ansprüche 3 oder 4, **dadurch gekennzeichnet, dass** ein erster Maximalquerschnitt (15) der ersten Arbeitskammer (5) größer ist als ein dritter Maximalquerschnitt (19) der dritten Arbeitskammer (9).

6. Manuelles Knoblauchschälgerät nach einem der Ansprüche 3 bis 5, **dadurch gekennzeichnet, dass** die zweite Arbeitskammer (8) und die dritte Arbeitskammer (9) symmetrisch zu beiden Seiten der ersten Arbeitskammer (5) angeordnet sind.

7. Manuelles Knoblauchschälgerät nach einem der Ansprüche 1 bis 6, **dadurch gekennzeichnet, dass** das zweite offene Ende (3) durch eine vierte ringförmige Einschnürung gebildet wird.

8. Manuelles Knoblauchschälgerät nach einem der Ansprüche 1 bis 7, **dadurch gekennzeichnet, dass** der röhrenförmige Körper (1) eine glatte Innenseite (12) aufweist.

9. Manuelles Knoblauchschälgerät nach einem der Ansprüche 1 bis 8, **dadurch gekennzeichnet, dass** der röhrenförmige Körper (1) aus lebensmittelverträglichem Elastomermaterial hergestellt ist.

10. Manuelles Knoblauchschälgerät nach einem der Ansprüche 1 bis 9, **dadurch gekennzeichnet, dass** der röhrenförmige Körper (1) aus lebensmittelverträglichem Silikonmaterial hergestellt ist.

11. Manuelles Knoblauchschälgerät nach einem der Ansprüche 1 bis 10, **dadurch gekennzeichnet, dass** das flexible Material des röhrenförmigen Körpers (1) eine Härte zwischen 50 und 65 Shores A, bevorzugt zwischen 55 und 60 Shores A, aufweist.

12. Manuelles Knoblauchschälgerät nach einem der Ansprüche 1 bis 11, **dadurch gekennzeichnet, dass** der röhrenförmige Körper (1) eine Rotationsgeometrie aufweist.

13. Manuelles Knoblauchschälgerät nach einem der Ansprüche 1 bis 12, **dadurch gekennzeichnet, dass** der röhrenförmige Körper (1) eine Wand mit einer Dicke zwischen 1,5 und 2 mm aufweist.

## Claims

1. Manual garlic peeling accessory comprising a tubular body (1) having a first open end (2), a second open end (3) opposite the first open end (2), and a hollow interior (4) extending from the first open end (2) to the second open end (3), the tubular body (1) being made of a flexible material allowing the tubular body (1) to deform under the effect of pressure exerted when the garlic peeling accessory is used, the tubular body (1) having a first working chamber (5) configured to accommodate at least one garlic clove, the tubular body (1) having a first cross-sectional restriction (6) arranged at a distance from the first open end (2) and a second cross-sectional restriction (7), the first working chamber (5) extending between the first cross-sectional restriction (6) and the second cross-sectional restriction (7), the tubular body (1) having a second working chamber (8) configured to accommodate at least the majority of a garlic clove, the second working chamber (8) being arranged between the first cross-sectional restriction (6) and the first open end (2), the second working chamber (8) being delimited by the first cross-sectional restriction (6) and by a third cross-sectional restriction (10), **characterised in that** the first cross-sectional restriction (6) is formed by a first annular constriction, **in that** the second cross-sectional restriction (7) is formed by a second annular constriction, **in that** the third cross-sectional restriction (10) is merged with the first open end (2), and **in that** the first open end (2) is formed by a third annular constriction.

2. Manual garlic peeling accessory according to claim 1, **characterised in that** a first maximum cross-section (15) of the first working chamber (5) is greater than a second maximum cross-section (18) of the second working chamber (8).

3. Manual garlic peeling accessory according to any of claims 1 or 2, **characterised in that** the second cross-sectional restriction (7) is arranged at a distance from the second open end (3), and **in that** the tubular body (1) has a third working chamber (9) configured to accommodate at least the majority of a garlic clove, the third working chamber (9) being arranged between the second cross-sectional restriction (7) and the second open end (3), the third working chamber (9) being delimited by the second cross-sectional restriction (7) and by a fourth cross-sectional restriction (11).

4. Manual garlic peeling accessory according to claim 3, **characterised in that** the fourth cross-sectional restriction (11) is merged with the second open end (3).

5. Manual garlic peeling accessory according to any of claims 3 or 4, **characterised in that** a first maximum cross-section (15) of the first working chamber (5) is greater than a third maximum cross-section (19) of the third working chamber (9).

6. Manual garlic peeling accessory according to any of claims 3 to 5, **characterised in that** the second working chamber (8) and the third working chamber (9) are arranged symmetrically on either side of the first working chamber (5).

7. Manual garlic peeling accessory according to any of claims 1 to 6, **characterised in that** the second open end (3) is formed by a fourth annular constriction.

8. Manual garlic peeling accessory according to any of claims 1 to 7, **characterised in that** the tubular body (1) has a smooth inner face (12).

9. Manual garlic peeling accessory according to any of claims 1 to 8, **characterised in that** the tubular body (1) is made of food-grade elastomer material.

10. Manual garlic peeling accessory according to any of claims 1 to 9, **characterised in that** the tubular body (1) is made of food-grade silicone material.

11. Manual garlic peeling accessory according to any of claims 1 to 10, **characterised in that** the flexible material of the tubular body (1) has a hardness of between 50 and 65 Shore A, preferably between 55 and 60 Shore A.

12. Manual garlic peeling accessory according to any of claims 1 to 11, **characterised in that** the tubular body (1) has a geometry of revolution.

13. Manual garlic peeling accessory according to any of claims 1 to 12, **characterised in that** the tubular body (1) has a wall with a thickness of between 1.5 and 2 mm.
